# EUROPÄISCHE PATENTANMELDUNG

(11) **EP 4 722 071 A1**
(43) Veröffentlichungstag der Anmeldung: **08.04.2026**
(21) Anmeldenummer: 25206008.2
(22) Anmeldetag: 01.10.2025
(51) Int. Cl.: B61G 5/08, B61G 5/04, B60T 15/36

(54) **ZUG, INSBESONDERE GÜTERZUG**

(30) Priorität: 02.10.2024 DE 102024128625
(71) Anmelder: Voith Patent GmbH, 89522 Heidenheim (DE)
(72) Erfinder: Schwab, Thomas, 89522 Heidenheim (DE)
(74) Vertreter: Voith Patent GmbH - Patentabteilung

(57) **Zusammenfassung**

Die Erfindung betrifft einen Zug, insbesondere Güterzug, mit einer Vielzahl von mit mechanischen Kupplungen aneinander gekuppelten Wagen;
mit einer Hauptluftleitung, die sich über aneinander gekuppelte Luftkupplungen an aneinander zugewandten, miteinander mit den mechanischen Kupplungen gekuppelten axialen Enden der Wagen durch die Wagen erstreckt;
mit Absperreinrichtungen, die den Luftkupplungen zugeordnete Absperrventile umfassen, um die Hauptluftleitung in Richtung der Luftkupplungen wahlweise freizugeben und druckdicht abzusperren.

Der erfindungsgemäße Zug ist dadurch gekennzeichnet, dass die Absperrventile als zumindest mittelbar elektrisch betätigte Luftventile ausgeführt sind.

## Beschreibung

Die vorliegende Erfindung betrifft einen Zug, insbesondere einen Güterzug, mit einer Vielzahl von mit mechanischen Kupplungen aneinander gekuppelten Wagen.

Bei einem Zug handelt es sich um ein schienengebundenes Fahrzeug. Ein Güterzug als schienengebundenes Fahrzeug dient dem Transport von Gütern. Bekannte Güterzüge weisen eine Hauptluftleitung auf, die sich über Luftkupplungen an den einander zugewandten axialen Enden der Wagen durch alle Wagen hindurch erstreckt. An der Hauptluftleitung sind Bremsen in jedem Wagen angeschlossen, die in Abhängigkeit des Luftdrucks in der Hauptluftleitung in dem jeweiligen Wagen den Wagen abbremsen. Wenn die Hauptluftleitung in dem entsprechenden Wagen entlüftet wird, wird die Bremse betätigt. Ein solches Entlüften erfolgt beispielsweise, wenn zwei miteinander gekuppelte Wagen unabsichtlich voneinander getrennt werden, sodass eine automatische Bremsung der Wagen erfolgt.

Damit an den nicht gekuppelten Enden des Zugs keine Druckluft aus den Luftkupplungen entweichen kann, ist im Bereich jeder Luftkupplung in den Wagen, also an jedem Ende eines Wagens, jeweils ein Absperrventil vorgesehen, um die Hauptluftleitung wahlweise freizugeben und druckdicht abzusperren. Somit kann das Absperrventil entweder geöffnet werden, um die Luftkupplung zur Entlüftung der Hauptluftleitung freizugeben, falls eine Bremsung des Wagens im Stand zum Abstellen des Wagens bewirkt werden soll, oder um eine druckluftleitende Verbindung zwischen den beiden aneinander gekuppelten Luftkupplungen zu ermöglichen, oder verschlossen werden, um die Hauptluftleitung entsprechend gegenüber der Umgebung abzudichten, wenn die Luftkupplung nicht gekuppelt ist. Dabei kann die Luftkupplung und ein daran angeschlossener Schlauch entlüftet werden.

Herkömmlich sind solche Absperrventile jeweils als Luftabsperrhahn ausgeführt, der vom Betriebspersonal im Gleisbett von Hand betätigt werden muss, was mit entsprechendem Aufwand verbunden ist. Allerdings stellt diese Anordnung auch sicher, dass nur im Stand des entsprechenden Wagens der Luftabsperrhahn betätigt werden kann, was die Gefahr einer ungewollten Betätigung, die zu einem sicherheitskritischen Zustand führen kann, reduziert.

Im Einzelnen ergibt sich folgende Funktionalität:
Am zumindest letzten Wagen und insbesondere auch dem ersten Wagen, welcher als Lok bzw. Zugfahrzeug vorliegt, wird damit die Hauptluftleitung geschlossen, damit der Luftdruck von 5 bar sich aufbauen kann. Bei 5 bar bremsen die Bremsen nicht. Bei allen anderen Wagen im Zug sind die Luftabsperrhähne offen, das heißt durchgängig. Damit wird eine durchgängige Hauptluftleitung im Zug realisiert.

Soll ein Wagen abgekuppelt werden, dann schließt der Rangierer die beiden Luftabsperrhähne, die sich zwischen den beiden voneinander zu entkuppelnden Wagen befinden. Dadurch wird die Hauptluftleitung in Richtung Lok und in Richtung der abzukuppelnden Wagen geschlossen. Es entweicht keine Luft, das heißt der bisher vorhandene Luftdruck bleibt in beiden voneinander getrennten Zugteilen erhalten. Es werden aber die Bremsschläuche der beiden voneinander zu entkuppelnden Wagen entlüftet, sodass der Rangierer die Bremsschläuche gefahrlos über die vorhandenen Luftkupplungen von Hand trennen kann.

Bei einer Bremsprobe öffnet der Rangierer den Luftabsperrhahn am letzten Wagen, um zu überprüfen, ob der Druck in der Hauptluftleitung bis nach vorne zur Lok abfällt. Damit wird nachgewiesen, dass die Hauptluftleitung bis nach vorne zur Lok durchgängig ist.

Der vorliegenden Erfindung liegt die Aufgabe zugrunde, einen Zug mit einer Vielzahl von mit mechanischen, insbesondere automatischen Kupplungen aneinander gekuppelten Wagen und mit einer entsprechenden Hauptluftleitung, die durch die Wagen geführt ist, anzugeben, bei dem der bisherige Aufwand für die Betätigung der Absperrventile an den Wagenenden vermieden wird.

Besonders vorteilhaft soll dabei die Entstehung zusätzlicher sicherheitskritischer Situationen ausgeschlossen werden. Insbesondere soll eine Fernsteuerung der Absperrventile vom führenden Wagen aus, beispielsweise der Lok, möglich sein, wie beispielsweise ein Schließen der Hauptluftleitung am letzten Wagen, bevorzugt zudem eine Überwachung der Luftdrücke in der Hauptluftleitung in jedem Wagen und eine Durchführung der Bremsprobe vom führenden Wagen aus, beispielsweise der Lok.

Die erfindungsgemäße Aufgabe wird durch einen Zug, insbesondere Güterzug, mit den Merkmalen von Anspruch 1 gelöst. Die abhängigen Ansprüche beschreiben vorteilhafte und besonders zweckmäßige Ausgestaltungen der Erfindung.

Ein erfindungsgemäßer Zug, der insbesondere als Güterzug ausgeführt ist, weist eine Vielzahl von mit mechanischen Kupplungen aneinander gekuppelten Wagen auf, sowie eine Hauptluftleitung, die sich über aneinander gekuppelte Luftkupplungen an aneinander zugewandten, miteinander mit den mechanischen Kupplungen gekuppelten axialen Enden der Wagen durch die Wagen erstreckt.

Es sind Absperreinrichtungen vorgesehen, die den Luftkupplungen zugeordnete Absperrventile umfassen, um die Hauptluftleitung in Richtung der Luftkupplungen wahlweise freizugeben und druckdicht abzusperren. Somit kann das Absperrventil, wie eingangs dargelegt, entweder geöffnet werden, um eine druckluftleitende Verbindung über die Luftkupplung zur Entlüftung der Hauptluftleitung freizugeben, falls eine Bremsung des Wagens bewirkt werden soll, oder um über die aneinander gekuppelten Luftkupplungen eine druckluftleitende Verbindung zwischen den Wagen zu ermöglichen, oder verschlossen werden, um die Hauptluftleitung entsprechend gegenüber der Umgebung abzudichten, wenn die Luftkupplung nicht gekuppelt ist. Eine Entlüftung des Bereichs der Hauptluftleitung auf der Seite der Luftkupplung hinter der Absperrstelle kann vorteilhaft mit dem Schließen der Luftkupplung erfolgen.

Die den Luftkupplungen an den jeweiligen axialen Enden des Wagens zugeordneten Absperrventile sind vorzugsweise innerhalb des Wagens, das heißt außerhalb einer Zugkupplung und/oder der Luftkupplung positioniert. Prinzipiell ist es jedoch auch möglich, das jeweilige Absperrventil im Bereich der Luftkupplung beziehungsweise in der Luftkupplung anzuordnen.

Erfindungsgemäß sind die Absperrventile als zumindest mittelbar elektrisch betätigte Luftventile ausgeführt. Das bedeutet, dass dem jeweiligen Absperrventil ein elektrischer Aktuator zugeordnet oder in dieses integriert ist, mit dem das Absperrventil durch elektrische Ansteuerung des Aktuators geöffnet und/oder geschlossen werden kann, bevorzugt zumindest geschlossen werden kann.

Durch die Erfindung können die Absperrventile fernbetätigt werden, was den Aufwand vermeidet, dass sich eine Person im Gleisbett aufhalten muss, um die Absperrventile zu betätigen. Selbstverständlich ist es möglich, dass die Absperrventile trotzdem eingerichtet sind, zusätzlich lokal im Gleisbett betätigt zu werden, beispielsweise durch durch die Person betätigbare elektrische Schalter im Bereich der Luftkupplungen beziehungsweise an den entsprechenden Wagenenden.

Bevorzugt sind die Absperrventile als Magnetventile ausgeführt, weisen demnach einen Elektromagneten als elektrischen Aktuator auf, der die elektrische Betätigung eines Ventilkörpers der Absperrventile ausführt.

Beispielsweise sind die Absperrventile als Normally-Open-Ventile ausgeführt, das heißt im stromlosen Zustand werden sie, beispielsweise durch einen Federspeicher, geöffnet und bei Anliegen elektrischer Spannung am elektrischen Aktuator werden sie geschlossen. Entsprechend kann eine Ventilfeder vorgesehen sein, welche den Ventilkörper in die geöffnete Stellung drückt und ein Aktuator, beispielsweise ein Elektromagnet, der im bestromten Zustand den Ventilkörper entgegen der Kraft der Feder in die geschlossene Position verbringt. Damit kann ein besonders sicherer Betrieb erreicht werden, da bei Unterbrechung der Spannungsversorgung zu einem Absperrventil beziehungsweise dessen elektrischen Aktuator dieses die Hauptluftleitung automatisch freigibt.

Bevorzugt sind in den Wagen an der Hauptluftleitung angeschlossene Bremsen angeordnet und eingerichtet, den jeweiligen Wagen in Abhängigkeit eines Luftdrucks in der Hauptluftleitung abzubremsen. Somit kann eine automatische Bremsung des Wagens erfolgen, wenn der Luftdruck in der Hauptluftleitung unter einen vorgegebenen Druckwert abfällt, beispielsweise bei einer ungewollten Zugtrennung.

Bevorzugt weisen die Wagen eine Spannungsversorgung auf oder sind an einer Spannungsversorgung angeschlossen, und die Absperrventile weisen jeweils mindestens einen elektrischen Aktuator (Es könnten auch mehrere sein um die Sicherheit zu erhöhen) auf, insbesondere in Form eines Elektromagneten, oder sind an einem solchen angeschlossen, der wiederum an der Spannungsversorgung angeschlossen ist, wobei in diesem Anschluss wenigstens ein elektrischer und/oder elektronischer Schalter vorgesehen ist. Mit einem solchen elektrischen Schalter wird die Funktionsweise des Absperrventils bestimmt. Ein solcher elektrischer Schalter ist beispielsweise ein Transistor. Andere Ausführungen derartiger Schalter sind ebenfalls denkbar.

Bevorzugt ist der wenigstens eine elektrische Schalter, insbesondere in Form eines Transistors, der in dem Anschluss zur Spannungsversorgung vorgesehen ist, an einer elektronischen Steuervorrichtung angeschlossen, die in einem der Wagen, insbesondere in dem jeweiligen Wagen, in dem jeweils auch der wenigstens eine elektrische Schalter angeordnet ist, vorgesehen ist, und mit welcher der elektrische Schalter schaltbar ist. Somit kann jeder Wagen eine eigene Steuervorrichtung umfassen, die den oder die elektrischen Schalter betätigt. Zusätzlich oder alternativ können die elektrischen Schalter eines Wagens auch mit einer Steuervorrichtung eines anderen Wagens, insbesondere in der Lokomotive, betätigt werden.

Bevorzugt ist eine Steuerleitung von der Lokomotive durch alle Wagen vorgesehen, an der die Steuervorrichtungen in den Wagen angeschlossen sind. Die Lokomotive kann demnach eine Master-Steuervorrichtung aufweisen, welche die Steuervorrichtungen in den Wagen als sogenannte Slave-Steuervorrichtungen steuert.

Bevorzugt ist/sind in dem Anschluss zwischen der Spannungsversorgung und dem elektrischen Aktuator jeweils wenigstens einer, mehrere oder alle der folgenden elektrischen Schalter angeordnet:
- Ein erster elektrischer Schalter, der in Abhängigkeit davon geschlossen wird, ob es sich bei dem Wagen, in dem er angeordnet ist, um den Wagen an einem Zugende handelt. Das Schließen kann zum Beispiel durch einen von einem Zugführer oder einer Person im Gleisbett eingegeben Befehl erfolgen, und/oder durch einen Sensor, der automatisch erfasst, ob es sich bei dem Wagen um einen Wagen an einem Zugende handelt.
- Ein zweiter elektrischer Schalter, der in Abhängigkeit davon geschlossen wird, ob die mechanische Kupplung und/oder die Luftkupplung an dem axialen Ende des Wagens, an dem der zweite Schalter angeordnet ist, nicht gekuppelt ist. Die Auslösung kann durch einen Sensor, der automatisch erfasst, ob die mechanische Kupplung und/oder die Luftkupplung an dem axialen Ende des Wagens, an dem der zweite Schalter angeordnet ist, gekuppelt oder nicht gekuppelt ist, erfolgen. Die Zustand der mechanischen Kupplung kann auch durch ein Steuergerät der mechanischen Kupplung zur Verfügung gestellt werden und an die an den zweiten elektrischen Schalter angeschlossene Steuervorrichtung übermittelt werden.
- Ein dritter elektrischer Schalter, der in Abhängigkeit davon geschlossen wird, ob die Steuervorrichtung in einen Rangierbetrieb geschaltet ist. Entsprechend kann das Schließen zum Beispiel durch einen von einem Zugführer oder einer Person im Gleisbett eingegeben Befehl erfolgen. Wenn sich der Wagen oder Zug im Rangierbetrieb befindet, wird der dritte elektrische Schalter geschlossen, damit das Absperrventil geschlossen werden kann. Anderenfalls, wenn sich der Wagen oder Zug im Fahrbetrieb befindet, bleiben der dritte elektrische Schalter und damit das Absperrventil geöffnet.
- Ein vierter elektrischer Schalter, der zum Absperren der Hauptluftleitung geschlossen werden muss. Das Schließen kann zum Beispiel durch einen von einem Zugführer oder einer Person im Gleisbett eingegeben Befehl erfolgen.

Besonders bevorzugt sind erste, zweite und dritte elektrische Schalter vorgesehen, und der erste und zweite elektrische Schalter sind in Reihe zueinander und parallel zu dem dritten elektrischen Schalter angeordnet. Durch die Reihenschaltung kann eine besonders sichere Schaltlogik zur Betätigung des jeweiligen Absperrventils erreicht werden.

Besonders bevorzugt ist auch der vierte elektrische Schalter vorgesehen und in Reihe zu der Parallelschaltung aus dem ersten, zweiten und dritten elektrischen Schalter angeordnet. Damit kann der vierte elektrische Schalter als Steuerschalter verwendet werden, um das jeweilige Absperrventil zu öffnen und zu schließen, und die anderen drei elektrischen Schalter können als Sicherheitsschalter verwendet werden, die vermeiden, dass das Absperrventil geschlossen wird, wenn nicht die entsprechenden Randbedingungen, die zum Schließen des ersten und zweiten elektrischen Schalters oder zum Schließen des dritten elektrischen Schalters führen, vorliegen.

Zur Verbesserung der Sicherheit ist bevorzugt in jedem Wagen in der Hauptluftleitung zwischen den Absperrventilen ein Drucksensor angeordnet, der an der elektronischen Steuervorrichtung oder an einer zusätzlichen elektronischen Steuervorrichtung angeschlossen ist, die eingerichtet ist, bei Erfassung eines kritischen Druckwerts den Wagen oder alle Wagen abzubremsen. Beispielsweise liest die Steuervorrichtung in dem Wagen, in dem der Drucksensor angeordnet ist, den vom Drucksensor übermittelten Druckwerte aus und übermittelt diesen an die Steuervorrichtung, beispielsweise in der Lok, welche die Funktion der Master-Steuervorrichtung innehat. Diese Master-Steuervorrichtung vergleicht die aus den Steuervorrichtungen (Slave-Steuervorrichtungen) entsprechend übermittelten Druckwerte miteinander und prüft, ob die übermittelten Druckwerte innerhalb einer vorgegebenen Toleranz identisch sind. Bei einer unzulässigen Abweichung der übermittelten Druckwerte voneinander leitet die Master-Steuervorrichtung eine Bremsung des Zugs ein. Dies kann beispielsweise durch Ansteuern von elektropneumatischen Bremsventilen (Notbremsventilen) in den einzelnen Wagen erfolgen und/oder durch gezieltes Ansteuern der Absperrventile, insbesondere in allen Wagen oder auch nur am Ende des letzten Wagens, um die Hauptluftleitung zu entlüften. Damit kann ein kritischer Zustand vermieden werden, der beispielsweise dann auftritt, wenn ein Absperrventil, beispielsweise nahe der Lok geschlossen ist und die Hauptluftleitung im Bereich der Lok beziehungsweise lokseitig vor dem Absperrventil entlüftet wird, sodass die Lok nahezu den gesamten Zug mit ihren Bremsen abbremsen muss, weil die Hauptluftleitung hinter dem versehentlich geschlossenen Absperrventil nicht entlüftet wird. Entsprechend könnte auch auftreten, dass die Hauptluftleitung in einem hinteren Abschnitt des Zugs entlüftet wird, die Bremsen in diesen Wagen die Wagen bremsen, die Hauptluftleitung aufgrund eines versehentlich geschlossenen Absperrventils im vorderen Teil des Zugs nicht entlüftet wird und somit die Lokomotive die gebremsten Wagen schleppen muss. Beides kann durch eine Steuerlogik und die Drucksensoren vermieden werden.

Wenn alle Absperrventile versehentlich geschlossen werden, ist über diese eine Abbremsung der Wagen mittels eines Druckluftabfalls in der Hauptluftleitung nicht möglich. Bevorzugt ist daher in der Hauptluftleitung in den Wagen, insbesondere in jedem Wagen, ein elektropneumatisches Bremsventil (Notbremsventil) angeordnet, mit welchem die Bremsen aktivierbar sind, indem dieses die Hauptluftleitung in dem/den Wagen entlüften. Somit können die Bremsen elektrisch aktiviert werden, beispielsweise wenn eine versehentliche Trennung des Zugs festgestellt wird, insbesondere durch eine elektrische Leitungsunterbrechung und/oder durch einen Sensor, der das unbeabsichtigte Fehlen eines Nachbarwagens erfasst.

Grundsätzlich ist es günstig, wenn die Betätigung der Absperrventile für die verschiedenen dargestellten Funktionen durch eine Master-Steuervorrichtung, beispielsweise in der Lok, angesteuert wird. Es ist jedoch auch möglich, dass die Absperrventile lokal durch eine Steuervorrichtung in einem Wagen angesteuert werden, entweder weil diese als Master-Steuervorrichtung arbeitet oder in einer bestimmten Situation autonom von der Master-Steuervorrichtung arbeitet.

Mit der erfindungsgemäßen Fernsteuerung der Absperrventile kann auch eine Bremsprobe, beispielsweise von der Lok aus, ferngesteuert ausgeführt werden.

Die Erfindung soll nachfolgend anhand eines Ausführungsbeispiels und den Figuren exemplarisch erläutert werden.

Es zeigen:
- Figur 1: ein Ausführungsbeispiel eines Zugs:
- Figur 2: eine exemplarische Darstellung der Wagen des Zugs mit erfindungsgemäßen Absperreinrichtungen;
- Figur 3: eine exemplarische Darstellung eines Notbremsventils.

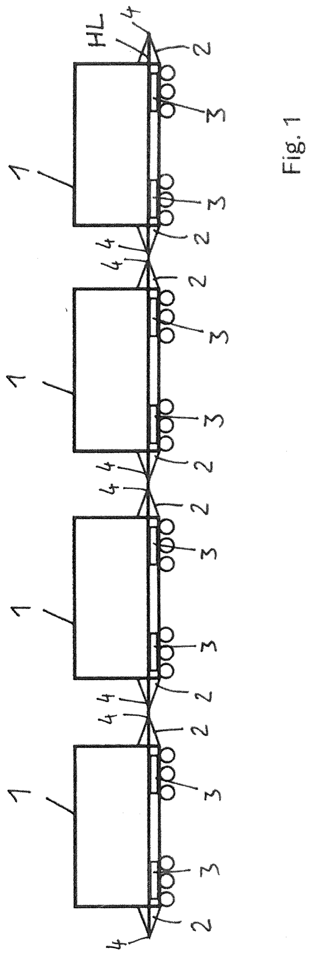

In der Figur 1 ist exemplarisch ein Zug dargestellt, beispielsweise in Form eines Güterzugs, bei dem die vorliegende Erfindung angewendet werden kann. Der Zug umfasst Wagen 1, die über mechanische Kupplungen 2 mechanisch miteinander gekuppelt sind. Die mechanischen Kupplungen 2 sind beispielsweise als Scharfenbergkupplung ausgeführt.

Bevorzugt sind die Wagen 1 über die Kupplungen 2 mechanisch, pneumatisch und elektrisch miteinander gekuppelt.

Entsprechend sind in den mechanischen Kupplungen 2 oder zusätzlich zu diesen Luftkupplungen 4 vorgesehen. Jeweils die Luftkupplungen 4 an zwei aneinander zugewandten axialen Enden der Wagen 1 sind druckluftleitend miteinander gekuppelt, sodass eine Hauptluftleitung HL ausgebildet wird, die sich durchgängig durch alle Wagen 1 erstreckt. An der Hauptluftleitung HL sind Bremsen 3 druckluftleitend angeschlossen. Die Bremsen 3 werden in Abhängigkeit des Luftdrucks im entsprechenden Abschnitt der Hauptluftleitung HL in dem jeweiligen Wagen 1 aktiviert. Dadurch führt ein Druckabfall in der Hauptluftleitung HL, beispielsweise aufgrund einer versehentlichen Trennung von zwei Wagen 1 zur automatischen Abbremsung der Wagen 1, weil die Druckluft über die dann nicht mehr aneinander gekuppelten Luftkupplungen 4 entweicht.

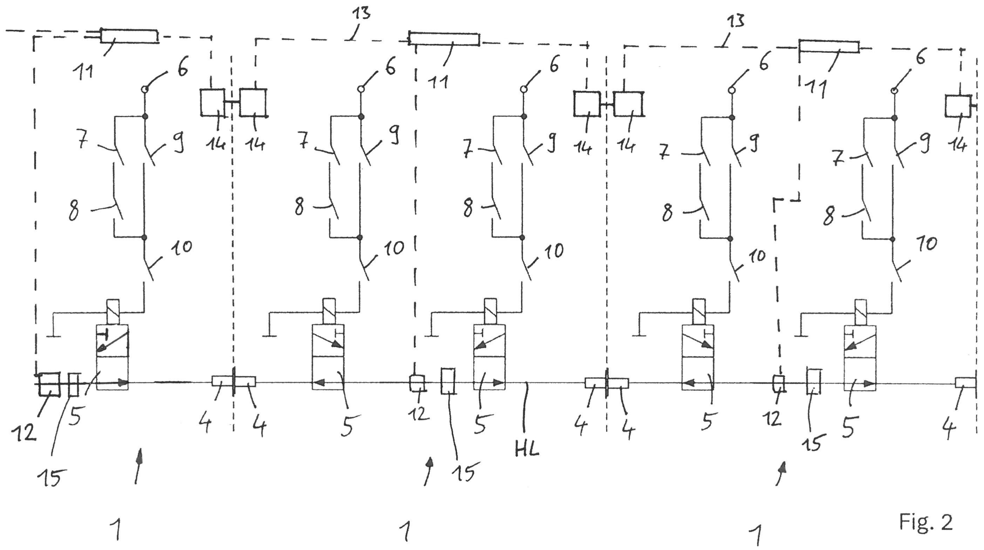

Entsprechend müssen für den Fahrbetrieb die Luftkupplungen 4 an den axialen Enden des Zugs verschlossen werden, um einen Druckaufbau in der Hauptluftleitung HL zu ermöglichen, sodass die Bremsen 3 gelöst werden. Hierfür sind, wie aus der Figur 2 ersichtlich ist, den Luftkupplungen 4 zugeordnete Absperreinrichtungen vorgesehen, die zumindest die Absperrventile 5 umfassen. Die Absperrventile 5 sind zumindest mittelbar elektrisch betätigte Luftventile.

Bevorzugt umfassen die Absperreinrichtungen zudem in Reihe und parallel miteinander verschaltete elektrische Schalter 7, 8, 9, 10, über die jedes Absperrventil 5 beziehungsweise dessen Aktuator, hier beispielsweise in Form eines Elektromagneten, an einer Spannungsversorgung 6 angeschlossen ist. Bei der Spannungsversorgung 6 kann es sich um eine dezentrale Spannungsversorgung im jeweiligen Wagen 1 handeln, um eine zentrale Spannungsversorgung 6 für mehrere oder alle Wagen 1, beispielsweise in einer Lok, oder um eine externe Spannungsversorgung. Auch Mischformen sind möglich.

Gemäß einem Ausführungsbeispiel weist die Spannungsversorgung 6 eine relativ geringe Spannung auf, beispielsweise eine Spannung von 48 Volt.

Im gezeigten Ausführungsbeispiel umfassen die elektrischen Schalter 7, 8, 9, 10 einen ersten elektrischen Schalter 7, der in Reihe zu einem zweiten elektrischen Schalter 8 und in Reihe zu einem vierten elektrischen Schalter 10 angeordnet ist. Ein dritter elektrischer Schalter 9 ist parallel zu dem ersten elektrischen Schalter 7 und dem zweiten elektrischen Schalter 8 und in Reihe zu dem vierten elektrischen Schalter 10 angeordnet. Die entsprechenden elektrischen Schalter 7, 8, 9, 10 sind jeweils zwischen jedem Absperrventil 5 und dessen Spannungsversorgung 6 vorgesehen.

Je Wagen 1 ist wenigstens eine elektronische Steuervorrichtung 11 vorgesehen. Die elektronische Steuervorrichtungen 11 in den verschiedenen Wagen 1 sind über eine Steuerleitung 13 miteinander verbunden. Entsprechend sind elektrische Anschlüsse 14, beispielsweise Steckverbindungen, an den axialen Wagenenden der Wagen 1 vorgesehen, um die Abschnitte der Steuerleitung 13 in den einzelnen Wagen 1 miteinander zu verbinden. Diese elektrischen Anschlüsse 14 können beispielsweise in den mechanischen Kupplungen 2 integriert sein.

Die Steuervorrichtungen 11 sind an den elektrischen Schaltern 7, 8, 9, 10 zu deren Betätigung angeschlossen, sodass die elektrischen Schalter 7, 8, 9, 10 ferngesteuert betätigt werden können, beispielsweise aus einer Lok. Beispielsweise ist der erste Wagen 1 eine solche Lok und die beiden anderen in der Figur 2 dargestellten Wagen 1 sind Waggons. Die elektronische Steuervorrichtung 11 der Lok kann als Master arbeiten und die elektronischen Steuervorrichtungen 11 in den Waggons jeweils als Slave, dies ist jedoch nicht zwingend.

Der erste elektrische Schalter 7 wird beispielsweise immer dann mittels der Steuervorrichtung 11 ferngesteuert geschlossen, oder in Abhängigkeit eines Sensors, der einen entsprechenden Zustand erkennt, wenn es sich bei dem entsprechenden Wagen 1 um den ersten oder letzten Wagen 1 eines Zugs handelt.

Der zweite elektrische Schalter 8 wird entsprechend durch die Steuervorrichtung 11 ferngesteuert oder in Abhängigkeit eines Sensors geschlossen, wenn die zugehörige Luftkupplung 4 und/oder mechanische Kupplung 2 nicht gekuppelt ist.

Der dritte elektrische Schalter 9 wird beispielsweise dann geschlossen, wenn sich der Wagen 1 in einem Rangiermodus befindet. Dies kann entsprechend wiederum ferngesteuert erfolgen.

Der vierte elektrische Schalter 10 wird immer dann geschlossen, wenn das an ihm angeschlossene Absperrventil 5 geschlossen werden soll. Somit erfolgt ein Verbringen des Absperrventils 5 in die geschlossene Stellung nur dann, wenn dies ausdrücklich gewünscht ist, entsprechend der vierte elektrische Schalter 10 geschlossen ist, und die übrigen Randbedingungen vorliegen, in Abhängigkeit von denen entweder der erste elektrische Schalter 7 und der zweite elektrische Schalter 8 und/oder der dritte elektrische Schalter 9 geschlossen wird. Dadurch kann ein Absperren der Hauptluftleitung HL mit dem jeweiligen Absperrventil 5 nur vergleichsweise sicher erfolgen und ein unbeabsichtigtes Schließen wird mit hoher Sicherheit verhindert.

Zusätzlich ist insbesondere in der Hauptluftleitung HL in jedem Wagen ein Drucksensor 12 positioniert, der den Luftdruck in der Hauptluftleitung HL in dem entsprechenden Wagen 1 erfasst. Der Drucksensor 12 ist ebenfalls an der Steuervorrichtung 11 des entsprechenden Wagens angeschlossen. Die Steuervorrichtung 11 übermittelt den mit dem Drucksensor 12 erfassten Druck in der Hauptluftleitung HL an eine als Master-Steuervorrichtung arbeitende Steuervorrichtung 11, beispielsweise in der Lok. Diese Master-Steuervorrichtung vergleicht alle von den Slave-Steuervorrichtungen 11 in den Wagen 1 übermittelten Druckwerte miteinander und leitet, wenn die Druckwerte nicht innerhalb eines gemeinsamen vorgegebenen Wertebereichs liegen, eine Abbremsung des Zugs ein.

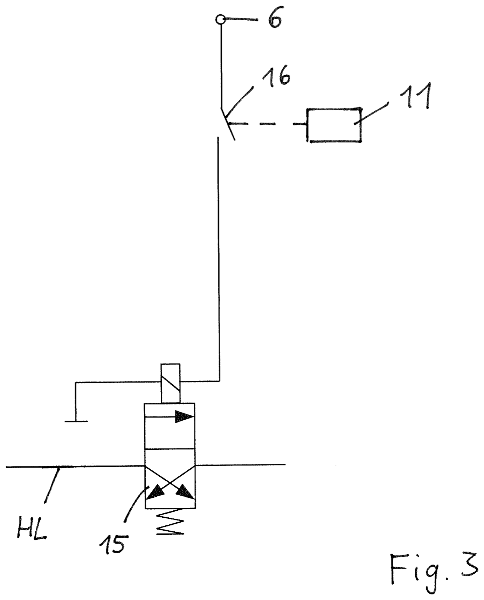

In den Wagen 1 sind ferner zwischen den Absperrventilen 5 elektropneumatische Bremsventile 15 als Notbremsventile vorgesehen, die elektrisch angesteuert werden können, um die Hauptluftleitung HL zu entlüften. Ein Ausführungsbeispiel für ein solches elektropneumatisches Bremsventil 15 ist in der Figur 3 dargestellt. Dieses ist über einen elektrischen Notbremsschalter 16 an der Spannungsversorgung 6 im jeweiligen Wagen 1 angeschlossen und wird durch die Steuervorrichtung 11 betätigt.

### Bezugszeichen

- 1: Wagen
- 2: mechanische Kupplung
- 3: Bremse
- 4: Luftkupplung
- 5: Absperrventil
- 6: Spannungsversorgung
- 7: erster elektrischer Schalter
- 8: zweiter elektrischer Schalter
- 9: dritter elektrischer Schalter
- 10: vierter elektrischer Schalter
- 11: elektronische Steuervorrichtung
- 12: Drucksensor
- 13: Steuerleitung
- 14: elektrischer Anschluss
- 15: elektropneumatisches Bremsventil
- 16: elektrischer Notbremsschalter

## Patentansprüche

1. Zug, insbesondere Güterzug,
mit einer Vielzahl von mit mechanischen Kupplungen (2) aneinander gekuppelten Wagen (1);
mit einer Hauptluftleitung (HL), die sich über aneinander gekuppelte Luftkupplungen (4) an aneinander zugewandten, miteinander mit den mechanischen Kupplungen (2) gekuppelten axialen Enden der Wagen (1) durch die Wagen (1) erstreckt;
mit Absperreinrichtungen, die den Luftkupplungen (4) zugeordnete Absperrventile (5) umfassen, um die Hauptluftleitung (HL) in Richtung der Luftkupplungen (4) wahlweise freizugeben und druckdicht abzusperren; **dadurch gekennzeichnet, dass**
die Absperrventile (5) als zumindest mittelbar elektrisch betätigte Luftventile ausgeführt sind.

2. Zug gemäß Anspruch 1, **dadurch gekennzeichnet, dass** die Absperrventile (5) als Magnetventile ausgeführt sind.

3. Zug gemäß einem der Ansprüche 1 oder 2, **dadurch gekennzeichnet, dass** in den Wagen (1) an der Hauptluftleitung (HL) angeschlossene Bremsen angeordnet und eingerichtet sind, den jeweiligen Wagen (1) in Abhängigkeit eines Luftdrucks in der Hauptluftleitung (HL) abzubremsen.

4. Zug gemäß einem der Ansprüche 1 bis 3, **dadurch gekennzeichnet, dass** die Wagen (1) eine Spannungsversorgung (6) aufweisen oder an einer Spannungsversorgung (6) angeschlossen sind und die Absperrventile (5) jeweils einen elektrischen Aktuator, insbesondere in Form eines Elektromagneten, aufweisen oder an einem solchen angeschlossen sind, der an der Spannungsversorgung (6) angeschlossen ist, wobei in dem Anschluss wenigstens ein elektrischer Schalter (7, 8, 9, 10) vorgesehen ist.

5. Zug gemäß Anspruch 4, **dadurch gekennzeichnet, dass** der wenigstens eine elektrische Schalter (7, 8, 9, 10), der in dem Anschluss vorgesehen ist, an einer elektronischen Steuervorrichtung (11) angeschlossen ist, die in einem der Wagen (1), insbesondere in dem jeweiligen Wagen (1), in dem jeweils auch der wenigstens eine elektrische Schalter (7, 8, 9, 10) angeordnet ist, vorgesehen ist, und mit welcher der elektrischer Schalter (7, 8, 9, 10) schaltbar ist.

6. Zug gemäß einem der Ansprüche 4 oder 5, **dadurch gekennzeichnet, dass** in dem Anschluss jeweils wenigstens einer, mehrere oder alle der folgenden elektrischen Schalter (7, 8, 9, 10) angeordnet sind:
- ein erster elektrischer Schalter (7), der in Abhängigkeit davon geschlossen wird, ob es sich bei dem Wagen (1), in dem er angeordnet ist, um den Wagen (1) an einem Zugende handelt;
- ein zweiter elektrischer Schalter (8), der in Abhängigkeit davon geschlossen wird, ob die mechanische Kupplung (2) und/oder die Luftkupplung (4) an dem axialen Ende des Wagens (1), an dem der zweite Schalter (8) angeordnet ist, nicht gekuppelt ist;
- ein dritter elektrischer Schalter (9), der in Abhängigkeit davon geschlossen wird, ob die Steuervorrichtung (11) in einen Rangierbetrieb geschaltet ist;
- ein vierter elektrischer Schalter (10), der zum Absperren der Hauptluftleitung (HL) geschlossen werden muss.

7. Zug gemäß Anspruch 6, **dadurch gekennzeichnet, dass** der erste, zweite und dritte elektrische Schalter (7, 8, 9) vorgesehen sind und der erste und zweite elektrischer Schalter (7, 8) in Reihe zueinander und parallel zu dem dritten elektrischen Schalter (9) angeordnet sind.

8. Zug gemäß Anspruch 7, **dadurch gekennzeichnet, dass** auch der vierte elektrische Schalter (10) vorgesehen ist und in Reihe zu der Parallelschaltung des ersten, zweiten und dritten elektrischen Schalters (7, 8, 9) angeordnet ist.

9. Zug gemäß einem der Ansprüche 1 bis 8, **dadurch gekennzeichnet, dass** in jedem Wagen (1) in der Hauptluftleitung (HL) ein Drucksensor (12) angeordnet ist, der an der elektronischen Steuervorrichtung (11) oder einer zusätzlichen Steuervorrichtung angeschlossen ist.

10. Zug gemäß einem der Ansprüche 3 bis 9, **dadurch gekennzeichnet, dass** in der Hauptluftleitung (HL) in den Wagen (1), insbesondere in jedem Wagen (1), ein elektromagnetisches Bremsventil (15) angeordnet ist, mit welchem die Hauptluftleitung (HL) zur Aktivierung der Bremsen (3) entlüftet werden kann.
